(19) Europäisches Patentamt
European Patent Office
Office européen des brevets

(11) EP 4 807 837 A1

(12) EUROPEAN PATENT APPLICATION
published in accordance with Art. 153(4) EPC

(43) Date of publication:
**16.09.2026 Bulletin 2026/38**

(21) Application number: **23957990.7**

(22) Date of filing: **09.11.2023**

(51) International Patent Classification (IPC):
***H01M 10/0525*** *(2010.01)* ***H01M 10/052*** *(2010.01)*
***H01M 4/13*** *(2010.01)*

(52) Cooperative Patent Classification (CPC):
**H01M 10/052; H01M 4/70; H01M 10/0567; H01M 10/0568; H01M 10/0569;** H01M 2300/0028; Y02E 60/10

(86) International application number:
**PCT/CN2023/130762**

(87) International publication number:
**WO 2025/097382 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited**
**Ningde, Fujian 352100 (CN)**

(72) Inventors:
- **HE, Jun**
  **Ningde, Fujian 352100 (CN)**
- **LIU, Manman**
  **Ningde, Fujian 352100 (CN)**

(74) Representative: **Kraus & Lederer PartGmbB**
**Thomas-Wimmer-Ring 15**
**80539 München (DE)**

# (54) SECONDARY BATTERY AND ELECTRIC DEVICE

(57) This application provides a secondary battery and an electric apparatus. The secondary battery includes a positive electrode sheet, a negative electrode sheet, and an electrolyte, where the positive electrode sheet includes a positive electrode current collector and a positive electrode active material layer. The negative electrode sheet includes a negative electrode current collector and a negative electrode active material layer. A coating weight of the positive electrode active material layer is $W_z$, a coating weight of the negative electrode active material layer is $W_f$, and $W_z$ and $W_f$ satisfy: $1.6W_f \leq W_z \leq 2.2W_f$, and $3.25\ mg/cm^2 \leq W_f \leq 5.84\ mg/cm^2$. The positive electrode current collector integrally extends to form multiple positive electrode tabs, and the negative electrode current collector integrally extends to form multiple negative electrode tabs. The electrolyte includes an organic solvent, a lithium salt, and an additive. The organic solvent includes a chain carboxylate compound, where based on a mass of the electrolyte, a mass percentage of the chain carboxylate compound is 6% to 56%. Through the above settings, the low charging temperature rise of the secondary battery can be guaranteed while improving the charging speed of the secondary battery, thereby improving the kinetic performance of the secondary battery.

001
W
Up
Down
10
20
30
12
22

FIG. 1



Processed by Luminess, 75001 PARIS (FR)

## Description

### TECHNICAL FIELD

This application relates to the field of electrochemical technology, and in particular, to a secondary battery and an electric apparatus.

### BACKGROUND

Lithium-ion batteries have characteristics such as high specific energy, high operating voltage, low self-discharge rate, small volume, and light weight, and are widely used in various fields such as electric energy storage, portable electronic devices, and electric vehicles.

With the continuous iterative development of consumer lithium-ion batteries in recent years, the market's requirements for their charging speed and charging rate are increasingly high. Therefore, how to reduce the impedance of various components of the lithium-ion battery and improve the charging speed of the lithium-ion battery so as to meet the requirements of super fast charging while maintaining low temperature rise has become an urgent technical problem to be solved by those skilled in the art.

### SUMMARY

This application is intended to provide a secondary battery to guarantee the low charging temperature rise of the secondary battery while improving the charging speed of the secondary battery, thereby improving the kinetic performance and cycling performance of the secondary battery. In addition, an electric apparatus using the secondary battery is provided.

It should be noted that in the summary of this application, an example in which a lithium-ion battery is used as a secondary battery is used to illustrate this application. However, the secondary battery in this application is not limited to the lithium-ion battery, and can also be applied to a secondary battery such as a sodium-ion battery. The specific technical solutions are described below.

According to a first aspect of this application, a secondary battery is provided, where the secondary battery includes a positive electrode sheet, a negative electrode sheet, and an electrolyte; the positive electrode sheet includes a positive electrode current collector and a positive electrode active material layer; the negative electrode sheet includes a negative electrode current collector and a negative electrode active material layer; a coating weight of the positive electrode active material layer is $W_z$, a coating weight of the negative electrode active material layer is $W_f$, and $W_z$ and $W_f$ satisfy: $1.6W_f \leq W_z \leq 2.2W_f$, and $3.25\ mg/cm^2 \leq W_f \leq 5.84\ mg/cm^2$; the positive electrode current collector integrally extends to form multiple positive electrode tabs, and the negative electrode current collector integrally extends to form multiple negative electrode tabs; and the electrolyte includes an organic solvent, a lithium salt, and an additive, where the organic solvent includes a chain carboxylate compound, and based on a mass of the electrolyte, a mass percentage of the chain carboxylate compound is 6% to 56%. By adopting the above structural design of the positive electrode tabs and negative electrode tabs, during the cycling process of the secondary battery, multiple current channels may be provided on the positive electrode sheet and the negative electrode sheet, which reduces the internal resistance of the secondary battery, makes the voltage polarization of the secondary battery small under fast charging conditions, reduces the charging temperature rise of the secondary battery, and shortens the charging time of the secondary battery.

Adjusting the coating weights of the positive electrode active material layer and the negative electrode active material layer within the above ranges can reduce the thicknesses of the positive electrode active material layer and the negative electrode active material layer, shortening transmission distances of lithium ions inside the positive electrode sheet and inside the negative electrode sheet while guaranteeing the processing performance and energy density of the secondary battery, thereby reducing the ohmic polarization and concentration polarization of the secondary battery, improving the fast charging performance, and allowing the secondary battery to have high kinetic performance. In order to adapt to the high kinetic performance of the secondary battery, high requirements are placed on the electrolyte in the secondary battery. A transmission speed of lithium ions in a conventional electrolyte is relatively slow under a high-kinetic-performance system of the secondary battery, leading to a slow charging speed of the secondary battery, easily causing lithium precipitation during the cycling process, and resulting in degraded cycling performance of the secondary battery. By adjusting the composition and percentage of the electrolyte, the electrolyte has high conductivity and low viscosity, which can accelerate the transmission speed of lithium ions and further reduce the electrochemical polarization and concentration polarization of the secondary battery. In this application, an electrochemical system is optimized by combining the structural design of the positive electrode tabs and negative electrode tabs, the coating weights of the positive electrode active material layer and negative electrode active material layer, and the composition and percentage of the electrolyte, which can guarantee the low charging temperature rise of the secondary battery while improving the charging speed of the

secondary battery, thereby improving the kinetic performance and cycling performance of the secondary battery.

In some embodiments of this application, 6.49 mg/cm$^2$ $\leq W_z \leq$ 11.69 mg/cm$^2$. In this application, adjusting the coating weight of the positive electrode active material layer within the range of this application, shortens transmission distances of lithium ions and electrons on the positive electrode sheet while guaranteeing the processing performance and energy density of the secondary battery, reducing the impedance of the secondary battery, and allowing the secondary battery to have good cycling performance.

In some embodiments of this application, $N_1$ layers of positive electrode sheets are provided between two adjacent positive electrode tabs, and $N_2$ layers of negative electrode sheets are provided between two adjacent negative electrode tabs; where $N_1$ and $N_2$ are each independently selected from 0, 1, 2, or 3. Through the above settings of this application, multiple current channels are provided on the positive electrode sheet and the negative electrode sheet, reducing the impedance of the secondary battery, making the voltage polarization of the secondary battery small during fast charging, reducing the charging temperature rise, and shortening the charging time, thereby allowing the secondary battery to have good kinetic performance and cycling performance. It can be understood that adjusting $N_1$ and $N_2$ to 0 allow the positive electrode sheet and the negative electrode sheet to have more current channels, further reducing the internal resistance of the secondary battery, further reducing the charging temperature rise of the fast-charge secondary battery, and further shortening the charging time, thereby further improving the kinetic performance of the fast-charge secondary battery while guaranteeing the cycling performance and mechanical reliability of the fast-charge secondary battery. However, this may reduce the energy density of the battery to a certain extent. Adjusting $N_1$ and $N_2$ to 1, 2, or 3 reduces the number of tabs and increases the internal resistance to a certain extent, but can increase the energy density of the battery.

In some embodiments of this application, the chain carboxylate compound includes at least one of methyl formate, methyl acetate, ethyl formate, ethyl acetate, propyl acetate, ethyl propionate, methyl propionate, n-propyl propionate, isopropyl propionate, n-butyl propionate, isobutyl propionate, n-pentyl propionate, isopentyl propionate, ethyl n-butyrate, n-propyl n-butyrate, propyl isobutyrate, n-pentyl n-butyrate, n-pentyl isobutyrate, n-butyl n-butyrate, isobutyl isobutyrate, or n-pentyl n-valerate. Preferably, the chain carboxylate compound includes at least one of methyl formate, ethyl acetate, propyl acetate, methyl propionate, ethyl propionate, propyl propionate, or ethyl butyrate. By selecting the above types of chain carboxylate compounds, the obtained electrolyte has high conductivity and low viscosity, which is conducive to rapid transmission of lithium ions, thereby reducing the impedance of the secondary battery, reducing the charging temperature rise during fast charging of the secondary battery, shortening the charging time, and allowing for good kinetic performance and cycling performance.

In some embodiments of this application, the organic solvent further includes at least one of ethylene carbonate, propylene carbonate, dimethyl carbonate, diethyl carbonate, methyl ethyl carbonate, $\gamma$-butyrolactone, or tetrahydrofuran; and based on the mass of the electrolyte, a mass percentage of the organic solvent is 60% to 80%. Adjusting the type and mass percentage of the organic solvent within the ranges of this application is conducive to improving the stability of the electrolyte, thereby improving the kinetic performance and cycling performance of the secondary battery.

In some embodiments of this application, based on the mass of the electrolyte, a mass percentage of the lithium salt is 10% to 20%. Adjusting the mass percentage of the lithium salt within the above range allows the lithium salt to have high solubility in the electrolyte, allowing the electrolyte to have high conductivity, thereby improving the kinetic performance and cycling performance of the secondary battery.

In some embodiments of this application, the lithium salt includes at least one of lithium hexafluorophosphate, lithium difluorophosphate, lithium tetrafluoroborate, lithium hexafluoroarsenate, lithium perchlorate, lithium bis(fluorosulfonyl)imide, lithium bis(trifluoromethanesulfonyl)imide, lithium bis(oxalato)borate, or lithium difluoro(oxalato)borate. Selecting the above types of lithium salts allows the electrolyte to have high conductivity, thereby improving the kinetic performance and cycling performance of the secondary battery.

In some embodiments of this application, the additive includes at least one of succinonitrile, glutaronitrile, pimelonitrile, 1,2-bis(2-cyanoethoxy)ethane, 1,2-bis(2-cyanoethoxy)propane, or 1,2,3-tris(2-cyanoethoxy)propane; and based on the mass of the electrolyte, a mass percentage of the additive is 2% to 10%. Adjusting the type and mass percentage of the additive within the ranges of this application is conducive to forming a protective electrolyte film (CEI) on a surface of the positive electrode sheet, thereby improving the structural stability of the positive electrode sheet, reducing the side reactions in the electrolyte, and thus improving the high-temperature safety performance of the secondary battery.

According to a second aspect of this application, an electric apparatus is provided and includes the secondary battery according to any one of the foregoing embodiments. Therefore, the electric apparatus has good service performance.

The beneficial effects of this application are as follows:

This application provides a secondary battery and an electric apparatus, where an electrochemical system is optimized by combining the structural design of the positive electrode tabs and negative electrode tabs, coating weights of a positive electrode active material layer and a negative electrode active material layer, and the composition and percentage of an electrolyte, so that a good synergistic effect can be achieved between the structural design of the positive electrode tabs and negative electrode tabs, the coating weights of the positive electrode active material layer and negative electrode

active material layer, and the electrolyte. This can guarantee the low charging temperature rise of the secondary battery while improving the charging speed of the secondary battery, thereby improving the kinetic performance and cycling performance of the secondary battery. The electric apparatus of this application has good service performance.

## BRIEF DESCRIPTION OF DRAWINGS

The accompanying drawings described herein are intended for a further understanding of this application and constitute a part of this application. Illustrative embodiments of this application and descriptions thereof are intended to explain this application, and do not constitute any inappropriate limitation on this application.

FIG. 1 is a schematic structural diagram of an electrode assembly according to an embodiment of this application;
FIG. 2 is a schematic structural diagram of an electrode assembly according to another embodiment of this application;
FIG. 3 is a schematic diagram of a positional relationship between a positive electrode sheet and a negative electrode sheet according to an embodiment of this application along a thickness direction of the positive electrode sheet;
FIG. 4 is a schematic structural diagram of a positive electrode sheet according to an embodiment of this application; and
FIG. 5 is a schematic structural diagram of a negative electrode sheet according to an embodiment of this application.

Reference signs: electrode assembly 001; positive electrode sheet 10; positive electrode current collector 11; positive electrode active material layer 12; positive electrode tab 13; negative electrode sheet 20; negative electrode current collector 21; negative electrode active material layer 22; negative electrode tab 23; separator 30; positive electrode tab region 111; positive electrode body region 112; negative electrode tab region 211; and negative electrode body region 212.

## DETAILED DESCRIPTION

In order to make the objectives, technical solutions, and advantages of this application clearer, this application will be further described in detail below with reference to the accompanying drawings and some embodiments. Apparently, the described embodiments are only some rather than all of these embodiments of this application. All other embodiments obtained by those skilled in the art based on this application fall within the protection scope of this application.

It should be noted that in the summary of this application, an example in which a lithium-ion battery is used as a secondary battery is used to illustrate this application. However, the secondary battery in this application is not limited to the lithium-ion battery, and can also be applied to a secondary battery such as a sodium-ion battery.

According to a first aspect of this application, a secondary battery is provided. The secondary battery includes a positive electrode sheet, a negative electrode sheet, and an electrolyte. The positive electrode sheet includes a positive electrode current collector and a positive electrode active material layer. The negative electrode sheet includes a negative electrode current collector and a negative electrode active material layer. A coating weight of the positive electrode active material layer is $W_z$, a coating weight of the negative electrode active material layer is $W_f$, and $W_z$ and $W_f$ satisfy: $1.6W_f \leq W_z \leq 2.2W_f$, and $3.25\ mg/cm^2 \leq W_f \leq 5.84\ mg/cm^2$. For example, $W_f$ is 3.25 mg/cm$^2$, 3.5 mg/cm$^2$, 3.75 mg/cm$^2$, 4 mg/cm$^2$, 4.25 mg/cm$^2$, 4.5 mg/cm$^2$, 4.75 mg/cm$^2$, 5 mg/cm$^2$, 5.25 mg/cm$^2$, 5.5 mg/cm$^2$, 5.84 mg/cm$^2$, or a range defined by any two of these values. The positive electrode current collector integrally extends to form multiple positive electrode tabs. The negative electrode current collector integrally extends to form multiple negative electrode tabs. The electrolyte includes an organic solvent, a lithium salt, and an additive. The organic solvent includes a chain carboxylate compound. Based on a mass of the electrolyte, a mass percentage of the chain carboxylate compound is 6% to 56%. For example, the mass percentage of the chain carboxylate compound is 6%, 10%, 15%, 20%, 25%, 30%, 35%, 40%, 45%, 50%, 56%, or a range defined by any two of these values.

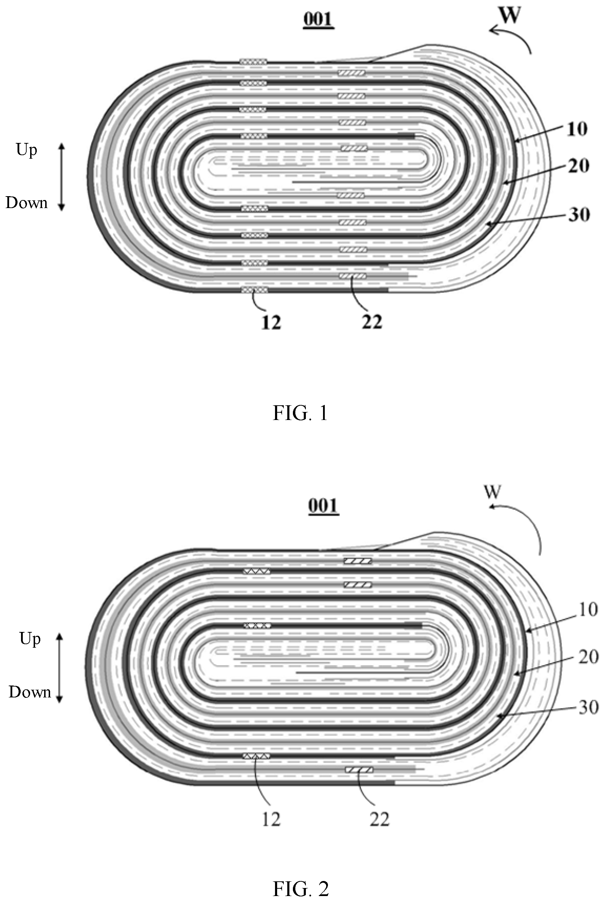

In this application, for ease of understanding, in an unfolded state of the positive electrode sheet, a length direction is defined as X, a width direction is defined as Y, and a thickness direction is defined as Z. It can be understood that length directions, width directions, and thickness directions of the negative electrode sheet and the separator in an unfolded state are the same as those of the positive electrode sheet. After the positive electrode sheet, the separator, and the negative electrode sheet are wound to form an electrode assembly with a wound structure, a winding direction of the electrode assembly is W. As shown in FIG. 1 to FIG. 5, along the winding direction W of the electrode assembly 001, the electrode assembly 001 includes a positive electrode sheet 10, a negative electrode sheet 20, and a separator 30. Along the thickness direction Z of the positive electrode sheet, the positive electrode sheet 10 includes a positive electrode current collector 11 and a positive electrode active material layer 12 located on two surfaces of the positive electrode current collector, the negative electrode sheet 20 includes a negative electrode current collector 21 and a negative electrode active material layer 22 located on two surfaces of the negative electrode current collector, and the separator 30

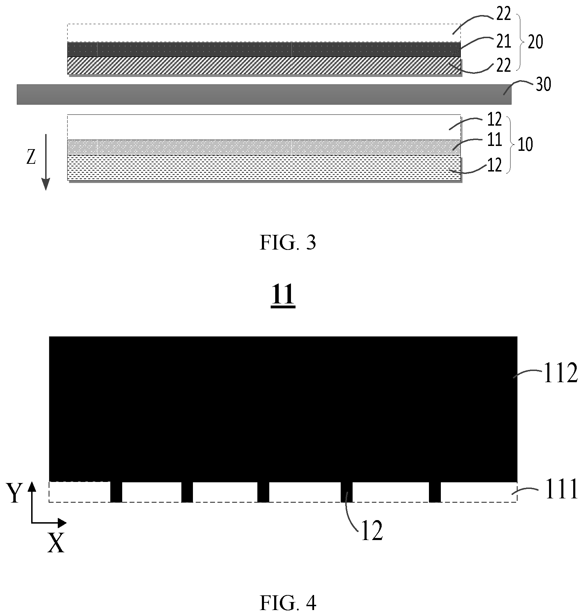

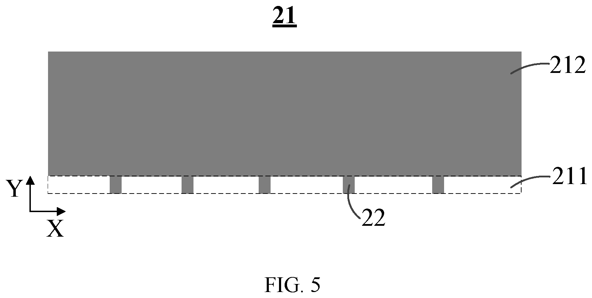

is located between the positive electrode sheet 10 and the negative electrode sheet 20. As shown in FIG. 4, the positive electrode sheet 10 includes a positive electrode current collector 11. The positive electrode current collector 11 integrally extends to form multiple positive electrode tabs 12. The positive electrode current collector 11 includes a positive electrode tab region 111 and a positive electrode body region 112. It can be understood that the positive electrode tab region 111 is a region where the positive electrode tabs 12 are provided, and the positive electrode body region 112 refers to a region of the positive electrode current collector 11 other than the positive electrode tab region 111. As shown in FIG. 5, the negative electrode sheet 20 includes a negative electrode current collector 21. The negative electrode current collector 21 integrally extends to form multiple negative electrode tabs 22. The negative electrode current collector 21 includes a negative electrode tab region 211 and a negative electrode body region 212. It can be understood that the negative electrode tab region 211 refers to a region where the negative electrode tabs 22 are provided, and the negative electrode body region 212 refers to a region of the negative electrode current collector 21 other than the negative electrode tab region 211. In this application, the above "integrally extending" means that the current collector and the tabs are integrally formed. For example, multiple tabs can be cut out on the current collector by die cutting or laser. This does not refer to a solution where the tabs are connected to the current collector through manners such as welding. It should be noted that the numbers, shapes, and sizes of the positive electrode tabs and the negative electrode tabs in FIG. 1, FIG. 2, FIG. 4, and FIG. 5 are only for exemplary illustration, and this application is not limited thereto. In this application, the above "multiple" refers to two or more. In an embodiment of this application, "multiple" refers to 2 to the same number as the number of electrode sheet layers. Exemplarily, "multiple" may refer to 2, 3, 4, 5, 6, 7, 10, 15, 20, 25, or 30.

At present, the market mostly adopts an embedded single-tab design, that is, there is only one positive electrode tab and one negative electrode tab in a secondary battery. A positive electrode tab is welded to a positive electrode sheet, and a negative electrode tab is welded to a negative electrode sheet, resulting in crowded current channels in the positive electrode sheet or the negative electrode sheet, which is not conducive to current conduction, resulting in excessive internal resistance of a lithium-ion battery, increased temperature rise during fast charging of the lithium-ion battery, and poor kinetic performance. Compared with a conventional single-tab structure, in this application, multiple positive electrode current collector positions are integrally formed in a bare foil region of the positive electrode sheet, and multiple negative electrode current collector positions are integrally formed in a bare foil region of the negative electrode sheet. Through the above settings, multiple current channels are provided on the positive electrode sheet and the negative electrode sheet, reducing the impedance of the secondary battery, making the voltage polarization of the secondary battery small during fast charging, reducing the charging temperature rise of the secondary battery, and shortening the charging time of the secondary battery, and meeting the fast charging requirements. When the coating weight of the positive electrode active material layer is less than $1.6W_f$, the coating weight of the negative electrode active material layer is excessively large relative to the coating weight of the positive electrode active material layer. When the potential of the secondary battery is reached, a lithium deintercalation speed of a positive electrode increases significantly, causing the actual potential of the positive electrode to be extremely high and the structure to be easily damaged, making the positive electrode decay rapidly, and causing the secondary battery to fail to cycle normally. When the coating weight of the positive electrode active material layer is greater than $2.2W_f$, the coating weight of the positive electrode active material layer is excessively large relative to the coating weight of the negative electrode active material layer, excessive lithium ions are deintercalated, a negative electrode cannot fully accept the lithium ions deintercalated from the positive electrode, so that lithium ions cannot be normally intercalated into the negative electrode sheet, thereby causing lithium precipitation on the negative electrode sheet, and affecting the cycling kinetic performance of the secondary battery. When the coating weight of the negative electrode active material layer is less than 3.25 mg/cm$^2$, the energy density of the secondary battery decreases, and the service life decreases, making it difficult to meet the process requirements of the secondary battery. When the coating weight of the negative electrode active material layer is greater than 5.84 mg/cm$^2$, transmission distances of lithium ions inside the positive electrode sheet and/or inside the negative electrode sheet increase, and the impedance of the secondary battery increases. Adjusting the coating weights of the positive electrode active material layer and the negative electrode active material layer within the above ranges can reduce the thicknesses of the positive electrode active material layer and the negative electrode active material layer, increasing the porosities of the positive electrode active material layer and the negative electrode active material layer, and shortening transmission distances of lithium ions and electrons inside the positive electrode sheet and inside the negative electrode sheet, thereby reducing the ohmic polarization and concentration polarization of the secondary battery, improving the fast charging performance, and allowing the secondary battery to have high kinetic performance. In order to adapt to the high kinetic performance of the secondary battery, high requirements are placed on the electrolyte in the secondary battery. A transmission speed of lithium ions in a conventional electrolyte is relatively slow under a high-kinetic-performance system of the secondary battery, leading to a slow charging speed of the secondary battery, easily causing lithium precipitation during the cycling process, and resulting in degraded cycling performance of the secondary battery. By adjusting the composition of the electrolyte and the mass percentage of the chain carboxylate compound within the range of this application, the electrolyte has high conductivity and low viscosity, which can accelerate the transmission speed of lithium ions and further reduce the electrochemical polarization and concentration polarization of the secondary battery, thereby improving the cycling

performance while guaranteeing the high kinetic performance of the secondary battery.

In this application, an electrochemical system is optimized by combining the structural design of the positive electrode tabs and the negative electrode tabs, the coating weights of the positive electrode active material layer and the negative electrode active material layer, and the composition and percentage of the electrolyte, which can guarantee the low charging temperature rise of the secondary battery while improving the charging speed of the secondary battery, thereby meeting the kinetic requirements of fast charging of the secondary battery, and improving the cycling performance. In this application, the mass percentage of the chain carboxylate compound can be adjusted by adjusting the amount of the chain carboxylate compound added to the electrolyte.

The secondary battery in this application can be used under fast charging conditions. Specifically, the secondary battery can be used at a charging rate of 5C to 15C. For example, the charging rate of the secondary battery is 5C, 8C, 10C, 12C, 15C, or a range defined by any two of these values.

In some embodiments of this application, 6.49 mg/cm$^2$ ≤ $W_z$ ≤ 11.69 mg/cm$^2$. For example, $W_z$ is 6.49 mg/cm$^2$, 7.00 mg/cm$^2$, 7.50 mg/cm$^2$, 8.00 mg/cm$^2$, 8.50 mg/cm$^2$, 9.00 mg/cm$^2$, 9.50 mg/cm$^2$, 10.00 mg/cm$^2$, 10.50 mg/cm$^2$, 11.00 mg/cm$^2$, 11.69 mg/cm$^2$, or a range defined by any two of these values. In this application, adjusting the coating weight of the positive electrode active material layer within the range of this application shortens transmission distances of lithium ions and electrons on the positive electrode sheet while guaranteeing the processing performance and energy density of the secondary battery, helping to reduce the ohmic polarization and concentration polarization of the secondary battery, thereby reducing the impedance of the secondary battery, and allowing the secondary battery to have good cycling performance.

In some embodiments of this application, $N_1$ layers of positive electrode sheets are provided between two adjacent positive electrode tabs, and $N_2$ layers of negative electrode sheets are provided between two adjacent negative electrode tabs; where $N_1$ and $N_2$ are each independently selected from 0, 1, 2, or 3. As shown in FIG. 1, in an electrode assembly with a wound structure, two adjacent positive electrode tabs or two adjacent negative electrode tabs are distributed on different layers. From top to bottom in the figure, no positive electrode sheet 10 is provided between two adjacent positive electrode tabs 12, and no negative electrode sheet 20 is provided between two adjacent negative electrode tabs 22. As shown in FIG. 2, in an electrode assembly with a wound structure, two adjacent positive electrode tabs or two adjacent negative electrode tabs are distributed on different layers. From top to bottom in the figure, one layer of positive electrode sheet 10 and two layers of positive electrode sheet 10 are respectively provided between two adjacent positive electrode tabs 12; and no negative electrode sheet 20 and three layers of negative electrode sheet 20 are respectively provided between two adjacent negative electrode tabs 22. Through the above settings of this application, the positive electrode sheet and the negative electrode sheet have sufficient numbers of positive electrode tabs and negative electrode tabs, so that multiple current channels are provided on the positive electrode sheet and the negative electrode sheet, reducing the internal resistance of the secondary battery, making the voltage polarization of the secondary battery small during high-rate fast charging, reducing the charging temperature rise, and shortening the charging time, thereby allowing the secondary battery to have good kinetic performance and cycling performance. It can be understood that adjusting $N_1$ and $N_2$ to 0 allows the positive electrode sheet and the negative electrode sheet to have more current channels, further reducing the internal resistance of the secondary battery, further reducing the charging temperature rise of the fast-charge secondary battery, and further shortening the charging time, thereby further improving the kinetic performance of the fast-charge secondary battery while guaranteeing the cycling performance and mechanical reliability of the fast-charge secondary battery. However, this may reduce the energy density of the secondary battery to a certain extent. Adjusting $N_1$ and $N_2$ to 1, 2, or 3 reduces the number of tabs and increases the internal resistance to a certain extent, but can increase the battery energy density.

In an embodiment of this application, $N_1$ layers of positive electrode sheets are provided between two adjacent positive electrode tabs, and $N_2$ layers of negative electrode sheets are provided between two adjacent negative electrode tabs; where $N_1$ and $N_2$ are each independently selected from 0. As shown in FIG. 1, in an electrode assembly with a wound structure, from top to bottom in the figure, no positive electrode sheet 10 is provided between two adjacent positive electrode tabs 12, and no negative electrode sheet 20 is provided between two adjacent negative electrode tabs 22. Adjusting $N_1$ and $N_2$ to 0 allows positive electrode tabs and negative electrode tabs to be provided on each layer of positive electrode sheets and negative electrode sheets in the secondary battery, allowing the positive electrode sheet and the negative electrode sheet to have more current channels, further reducing the internal resistance of the secondary battery, further reducing the charging temperature rise of the secondary battery, and further shortening the charging time, thereby further improving the kinetic performance of the secondary battery while guaranteeing the cycling performance of the secondary battery. In this application, $N_1$ layers of positive electrode sheets being provided between two adjacent positive electrode tabs means that the number of layers of positive electrode sheets having two surfaces coated with positive electrode active material layers between two adjacent positive electrode tabs is $N_1$; and $N_2$ layers of negative electrode sheets being provided between two adjacent negative electrode tabs means that the number of layers of negative electrode sheets having two surfaces coated with negative electrode active material layers between two adjacent negative electrode tabs is $N_2$.

In some embodiments of this application, the chain carboxylate compound includes at least one of methyl formate, methyl acetate, ethyl formate, ethyl acetate, propyl acetate, ethyl propionate, methyl propionate, n-propyl propionate, isopropyl propionate, n-butyl propionate, isobutyl propionate, n-pentyl propionate, isopentyl propionate, ethyl n-butyrate, n-propyl n-butyrate, propyl isobutyrate, n-pentyl n-butyrate, n-pentyl isobutyrate, n-butyl n-butyrate, isobutyl isobutyrate, or n-pentyl n-valerate. Preferably, the chain carboxylate compound includes at least one of methyl formate, ethyl acetate, propyl acetate, methyl propionate, ethyl propionate, propyl propionate, or ethyl butyrate. By selecting the above types of chain carboxylate compounds, the obtained electrolyte has high conductivity and low viscosity, which is conducive to rapid transmission of lithium ions, thereby reducing the electrochemical polarization and concentration polarization of the secondary battery, reducing the charging temperature rise during fast charging of the secondary battery, shortening the charging time, and allowing for good kinetic performance and cycling performance.

In some embodiments of this application, the organic solvent further includes at least one of ethylene carbonate, propylene carbonate, dimethyl carbonate, diethyl carbonate, methyl ethyl carbonate, γ-butyrolactone, or tetrahydrofuran; and based on the mass of the electrolyte, a mass percentage of the organic solvent is 60% to 80%. For example, the mass percentage of the organic solvent is 60%, 65%, 70%, 75%, 80%, or a range defined by any two of these values. Adjusting the type and mass percentage of the organic solvent within the ranges of this application is conducive to improving the solubility of the additive and the lithium salt, improving the stability of the electrolyte while guaranteeing the kinetic performance of the secondary battery, thereby improving the kinetic performance and cycling performance of the secondary battery. In this application, the mass percentage of the organic solvent can be adjusted by adjusting the amount of the organic solvent added to the electrolyte. A mass percentage of a non-chain carboxylate compound in the organic solvent is calculated by subtracting the mass percentage of the chain carboxylate compound from the mass percentage of the organic solvent.

In some embodiments of this application, based on the mass of the electrolyte, a mass percentage of the lithium salt is 10% to 20%. For example, the mass percentage of the lithium salt is 10%, 12%, 14%, 16%, 18%, 20%, or a range defined by any two of these values. Adjusting the mass percentage of the lithium salt within the above range allows the lithium salt to have high solubility in the electrolyte, allowing the electrolyte to have high conductivity, thereby improving the kinetic performance and cycling performance of the secondary battery. In this application, the mass percentage of the lithium salt can be adjusted by adjusting the amount of the lithium salt added to the electrolyte.

In some embodiments of this application, the lithium salt includes at least one of lithium hexafluorophosphate, lithium difluorophosphate, lithium tetrafluoroborate, lithium hexafluoroarsenate, lithium perchlorate, lithium bis(fluorosulfonyl)imide, lithium bis(trifluoromethanesulfonyl)imide, lithium bis(oxalato)borate, or lithium difluoro(oxalato)borate. Selecting the above types of lithium salts allows the electrolyte to have high conductivity, thereby improving the kinetic performance and cycling performance of the secondary battery.

In some embodiments of this application, the additive includes at least one of succinonitrile, glutaronitrile, pimelonitrile, 1,2-bis(2-cyanoethoxy)ethane, 1,2-bis(2-cyanoethoxy)propane, or 1,2,3-tris(2-cyanoethoxy)propane; and based on the mass of the electrolyte, a mass percentage of the additive is 2% to 10%. For example, the mass percentage of the additive is 2%, 3%, 4%, 5%, 6%, 7%, 8%, 9%, 10%, or a range defined by any two of these values. By adjusting the type and mass percentage of the additive within the range of this application, cyano groups in the nitrile compounds can complex with transition metal element ions in the positive electrode sheet to form a CEI film on the surface of the positive electrode sheet, thereby improving the structural stability of the positive electrode sheet and reducing side reactions between the positive electrode active material and the electrolyte, and thus improving the high-temperature safety performance of the secondary battery. In this application, the mass percentage of the additive can be adjusted by adjusting the amount of the additive added to the electrolyte.

This application has no particular limitation on the positive electrode current collector, provided that the objectives of this application can be achieved. For example, the positive electrode current collector may include an aluminum foil, an aluminum alloy foil, or a composite current collector (such as an aluminum-carbon composite current collector). The positive electrode active material layer of this application includes a positive electrode active material. This application has no particular limitation on the type of the positive electrode active material, provided that the objectives of this application can be achieved. For example, the positive electrode active material may include at least one of lithium nickel cobalt manganese oxide (NCM811, NCM622, NCM523, or NCM111), lithium nickel cobalt aluminum oxide, lithium iron phosphate, a lithium-rich manganese-based material, lithium cobalt oxide ($LiCoO_2$), lithium manganate, lithium manganese iron phosphate, or lithium titanate. In this application, the positive electrode active material may further include a non-metal element. For example, the non-metal element includes at least one of fluorine, phosphorus, boron, chlorine, silicon, or sulfur. This application has no particular limitation on the thicknesses of the positive electrode current collector and the positive electrode active material layer, provided that the objectives of this application can be achieved. For example, the thickness of the positive electrode current collector is 5 μm to 20 μm, preferably 6 μm to 18 μm. The thickness of the single-sided positive electrode material layer is 30 μm to 120 μm. In this application, the positive electrode active material layer may further include a conductive agent and a binder. This application has no particular limitation on the type of the binder in the positive electrode active material layer, provided that the objectives of this application can be achieved. For example,

the binder may include but is not limited to at least one of polyvinylidene fluoride, a vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. This application has no particular limitation on the type of the conductive agent in the positive electrode active material layer, provided that the objectives of this application can be achieved. For example, the conductive agent may include but is not limited to at least one of conductive carbon black (Super P), carbon nanotubes (CNTs), carbon fiber, flake graphite, Ketjen black, graphene, a metal material, or a conductive polymer. The above carbon nanotubes may include but are not limited to single-walled carbon nanotubes and/or multi-walled carbon nanotubes. The above carbon fiber may include but is not limited to vapor-grown carbon fiber (VGCF) and/or nano carbon fiber. The above metal materials may include but is not limited to metal powder and/or metal fiber. Specifically, the metal may include but is not limited to at least one of copper, nickel, aluminum, or silver. The above conductive polymer may include but is not limited to at least one of polyphenyl derivatives, polyaniline, polythiophene, polyacetylene, or polypyrrole. This application has no particular limitation on a mass ratio of the positive electrode active material, conductive agent, and binder in the positive electrode active material layer, and those skilled in the art can select according to actual needs, provided that the objectives of this application can be achieved.

This application has no particular limitation on the negative electrode current collector, provided that the objectives of this application can be achieved. For example, the negative electrode current collector may include a copper foil, a copper alloy foil, a nickel foil, a stainless steel foil, a titanium foil, foamed nickel, foamed copper, or a composite current collector (such as a lithium-copper composite current collector, a carbon-copper composite current collector, a nickel-copper composite current collector, or a titanium-copper composite current collector). The negative electrode active material layer of this application includes a negative electrode active material. This application has no particular limitation on the type of the negative electrode active material, provided that the objectives of this application can be achieved. For example, the negative electrode active material may include at least one of natural graphite, artificial graphite, mesocarbon microbeads (MCMB), hard carbon, soft carbon, silicon, a silicon-carbon composite, $SiO_x$ ($0 < x < 2$), Li-Sn alloy, Li-Sn-O alloy, Sn, SnO, $SnO_2$, spinel-structured lithium titanate $Li_4Ti_5O_{12}$, Li-Al alloy, or metallic lithium. This application has no particular limitation on the thicknesses of the negative electrode current collector and the negative electrode material layer, provided that the objectives of this application can be achieved. For example, the thickness of the negative electrode current collector is 4 μm to 20 μm, and the thickness of the negative electrode active material layer is 30 μm to 130 μm. Optionally, the negative electrode active material layer may further include a conductive agent and a binder. This application has no particular limitation on the type of the conductive agent in the negative electrode active material layer, provided that the objectives of this application can be achieved. For example, the conductive agent may be of the same type as the conductive agent in the above positive electrode active material layer. This application has no particular limitation on the type of the binder in the negative electrode active material layer, provided that the objectives of this application can be achieved. For example, the binder may be of the same type as the binder in the above positive electrode active material layer. This application has no particular limitation on a mass ratio of the negative electrode active material, conductive agent, and binder in the negative electrode active material layer, provided that the objectives of this application can be achieved.

The separator in the secondary battery in this application has no particular limitation, provided that the objectives of this application can be achieved. For example, the separator includes at least one of polyethylene (PE), polypropylene (PP), polyethylene terephthalate (PET), polyimide (PI), or aramid. For example, polyethylene includes at least one selected from high-density polyethylene, low-density polyethylene, and ultra-high molecular weight polyethylene. The separator of this application may have a porous structure. This application has no particular limitation on a pore size of the porous structure of the separator, provided that the objectives of this application can be achieved. For example, the pore size may be 0.01 μm to 1 μm. This application has no particular limitation on the thickness of the separator, provided that the objectives of this application can be achieved. For example, the thickness of the separator may be 5 μm to 500 μm.

The secondary battery in this application further includes a packaging bag for accommodating the positive electrode sheet, the negative electrode sheet, the separator, and the electrolyte, as well as other components known in the art in the secondary battery. This application has no limitation on the above other components. This application has no particular limitation on the packaging bag, and the packaging bag may be a packaging bag well-known in the art, provided that the objectives of this application can be achieved.

This application has no particular limitation on the secondary battery, and the secondary battery may include any apparatus in which electrochemical reactions take place. In an embodiment of this application, an electrochemical apparatus may include but is not limited to: a lithium-ion secondary battery (lithium-ion battery), a lithium polymer secondary battery, or a lithium-ion polymer secondary battery.

This application has no particular limitation on a preparation method of the positive electrode sheet, provided that the objectives of this application can be achieved. For example, the preparation method of the positive electrode sheet includes but is not limited to the following steps: (1) preparing a positive electrode slurry; (2) applying the positive electrode slurry on one surface of a positive electrode body region of a positive electrode current collector, drying, and then forming a positive electrode active material layer on one surface of the positive electrode body region of the positive electrode current

collector; (3) applying the positive electrode slurry on another surface of the positive electrode body region of the positive electrode current collector, drying, and then forming positive electrode active material layers on two surfaces of the positive electrode body region of the positive electrode current collector respectively; (4) cold pressing and then die-cutting a positive electrode tab region of the positive electrode current collector to make the positive electrode current collector integrally extend to form multiple positive electrode tabs; and (5) slitting to obtain the positive electrode sheet. This application has no particular limitation on the percentage and type of each component in the positive electrode slurry in the above step (2), and those skilled in the art can select according to actual conditions, provided that the objectives of this application can be achieved. This application has no particular limitation on the solid content of the positive electrode slurry in the above step (1), provided that the obtained coating weight of the positive electrode active material layer is within the range of this application and the objectives of this application can be achieved. This application has no particular limitation on the drying time and temperature in the above steps (2) and (4), provided that the objectives of this application can be achieved. This application has no particular limitation on process parameters of cold pressing in the above step (4), provided that the objectives of this application can be achieved.

This application has no particular limitation on a preparation method of the negative electrode sheet, provided that the objectives of this application can be achieved. For example, the preparation method of the negative electrode sheet includes but is not limited to the following steps: (1) preparing a negative electrode slurry; (2) applying the negative electrode slurry on one surface of a negative electrode body region of a negative electrode current collector, drying, and then forming a negative electrode active material layer on one surface of the negative electrode body region of the negative electrode current collector; (3) applying the negative electrode slurry on another surface of the negative electrode body region of the negative electrode current collector, drying, and then forming negative electrode active material layers on two surfaces of the negative electrode body region of the negative electrode current collector respectively; (4) cold pressing and then die-cutting a negative electrode tab region of the negative electrode current collector to make the negative electrode current collector integrally extend to form multiple negative electrode tabs; and (5) slitting to obtain the negative electrode sheet. This application has no particular limitation on the percentage and type of each component in the negative electrode slurry in the above step (1), and those skilled in the art can select according to actual conditions, provided that the objectives of this application can be achieved. This application has no particular limitation on the solid content of the negative electrode slurry in the above step (1), provided that the obtained coating weight of the negative electrode active material layer is within the range of this application and the objectives of this application can be achieved. This application has no particular limitation on the drying time and temperature in the above steps (2) and (3), provided that the objectives of this application can be achieved. This application has no particular limitation on process parameters of cold pressing in the above step (4), provided that the objectives of this application can be achieved.

This application has no particular limitation on a preparation method of the secondary battery, and a preparation method known in the art can be selected, provided that the objectives of this application can be achieved. For example, the preparation method of the secondary battery includes but is not limited to the following steps: stacking the separator, the positive electrode sheet, the separator, and the negative electrode sheet in sequence, and performing operations such as winding and folding the resulting stack as needed to obtain an electrode assembly with a wound structure, leading out multiple positive electrode tabs through spot-welding, leading out multiple negative electrode tabs through spot-welding, placing the electrode assembly into a housing, injecting the electrolyte into the housing, and sealing to obtain the secondary battery.

According to a second aspect of this application, an electric apparatus is provided and includes the secondary battery according to any one of the foregoing embodiments. Therefore, the electric apparatus has good service performance.

The electric apparatus of this application is not particularly limited and may be any electronic apparatus known in the prior art. For example, the electronic apparatus may include but is not limited to a notebook computer, a pen-input computer, a mobile computer, an e-book player, a portable phone, a portable fax machine, a portable copier, a portable printer, a head-mounted stereo headphone, a video recorder, a liquid crystal television, a portable cleaner, a portable CD player, a mini disc, a transceiver, an electronic notebook, a calculator, a storage card, a portable recorder, a radio, a backup power source, a motor, an automobile, a motorcycle, an electric bicycle, a bicycle, a lighting fixture, a toy, a game console, a clock, an electric tool, a flashlight, a camera, a large household storage battery, and a lithium-ion capacitor.

## Examples

The following describes some embodiments of this application more specifically by using examples and comparative examples. Various tests and evaluations are carried out according to the following methods.

### Test methods and devices:

### Test of coating weight:

**(1) Test of coating weight $W_z$ of positive electrode active material layer:**

After discharged at 0.5C to 3.0 V, a lithium-ion battery was disassembled to obtain a positive electrode sheet. The positive electrode sheet was soaked in a dimethyl carbonate (DMC) solution for 4 h, and then dried. A positive electrode sheet sample with an area of A $mm^2$ was cut and weighed on a balance, with the weight recorded as $p_1$. Then, a positive electrode active material layer on the positive electrode sheet was cleaned. A positive electrode current collector was weighed on the balance, with the weight recorded as $p_2$.

If the positive electrode sheet was a positive electrode sheet with having one surface coated with the positive electrode active material layer, $W_z = (p_1 - p_2) / A$.

If the positive electrode sheet was a positive electrode sheet with two surfaces coated with positive electrode active material layers, $W_z = (p_1 - p_2) / 2A$.

**(2) Test of coating weight $W_f$ of negative electrode active material layer:**

After discharged at 0.5C to 3.0 V, a lithium-ion battery was disassembled to obtain a negative electrode sheet. The negative electrode sheet was soaked in a DMC solution for 4 h, and then dried. A negative electrode sheet sample with an area of B $mm^2$ was cut and weighed on a balance, with the weight recorded as $q_1$. Then, a negative electrode active material layer on the negative electrode sheet was cleaned. A negative electrode current collector was weighed on the balance, with the weight recorded as $q_2$.

If the negative electrode sheet was a negative electrode sheet having one surface coated with the negative electrode active material layer, $W_f = (q_1 - q_2) / B$.

If the negative electrode sheet was a negative electrode sheet having two surfaces coated with negative electrode active material layers, $W_f = (q_1 - q_2) / 2B$.

**Test of kinetic performance:**

The lithium-ion batteries in each of examples and comparative examples were subjected to test of kinetic performance at a charging rate of 10C. The specific steps were as follows:
A test temperature was adjusted to a constant temperature of 25°C, and a temperature sensing line of a multi-channel thermometer was placed at the center of a surface of the lithium-ion battery, and the following steps were performed: (1) the lithium-ion battery was charged at a constant current of 10C to 4.20 V; (2) the lithium-ion battery was charged at a constant current of 8C to 4.35 V; (3) the lithium-ion battery was charged at a constant current of 5C to 4.45 V; (4) the lithium-ion battery was charged at a constant voltage of 4.45 V to 0.05C; (5) the lithium-ion battery was left standing for 30 min; (6) the lithium-ion battery was discharged at a constant current of 1C to 3.0 V; and (7) the lithium-ion battery was left standing for 30 min. Then, the test ended.

Charging speed: time from step (1) to step (4).

Charging temperature rise: a difference between a maximum temperature recorded by the temperature sensing line on the surface of the lithium-ion battery during the process from step (1) to step (2) and the room temperature.

The kinetic performance was characterized by the charging speed, the charging temperature rise, and the impedance of the lithium-ion battery, where a lower impedance of the lithium-ion battery led to a shorter the charging time and a smaller charging temperature rise, which indicated better the kinetic performance.

**Test of cycling performance:**

The lithium-ion battery in each embodiment and comparative example was tested for cycling performance at a charging rate of 10C. The specific steps were as follows:
A test temperature was adjusted to a constant temperature of 25°C, and the test was started and performed in the following steps: (1) the lithium-ion battery was charged at a constant current of 10C to 4.20 V; (2) the lithium-ion battery was charged at a constant current of 8C to 4.35 V; (3) the lithium-ion battery was charged at a constant current of 6C to 4.40 V; (4) the lithium-ion battery was charged at a constant voltage of 4.40 V to 0.05C; (5) the lithium-ion battery was left standing for 5 min; (6) the lithium-ion battery was discharged at a constant current of 1C to 3.0 V; (7) the lithium-ion battery was left standing for 5 min; and (8) steps (1) to (7) were repeated for 1000 cycles (cls). Then, the test ended.

Capacity retention rate (%) = discharge capacity after 1000 cls / first-cycle discharge capacity $\times$ 100%.

**Example 1-1**

<Preparation of positive electrode sheet>

A positive electrode active material lithium cobalt oxide, a positive electrode conductive agent superconducting carbon (Super P), and a positive electrode binder polyvinylidene fluoride (PVDF, Mw = 70 × $10^5$) were mixed at a mass ratio of 95:2.5:2.5, and N-methylpyrrolidone (NMP) was added as a solvent. The resulting mixture was stirred under the action of a vacuum mixer to obtain a positive electrode slurry with a solid content of 75wt% and a uniform system. The positive electrode slurry was uniformly applied on a positive electrode body region of one surface of a positive electrode current collector aluminum foil with a thickness of 13 μm, and dried at 95°C to obtain a positive electrode sheet having one surface coated with a positive electrode active material layer. Then, the above steps were repeated on a positive electrode body region of another surface of the aluminum foil to obtain a positive electrode sheet having two surfaces coated with positive electrode active material layers. Then, cold pressing, die-cutting, and slitting were performed. Drying was performed at 85°C for 4 h under vacuum after slitting to obtain a positive electrode sheet with a specification of 60 mm × 1580 mm for later use. A single-layer thickness of the positive electrode active material layer was 38.5 μm, and a thickness of the positive electrode sheet was 90 μm. The positive electrode tab region of the positive electrode current collector was integrally formed by die-cutting (with a structure as shown in FIG. 4, but not limited to FIG. 4) to form 20 positive electrode tabs. A coating weight $W_z$ of the positive electrode active material layer was 9.08 mg/cm$^2$.

<Preparation of negative electrode sheet>

A negative electrode active material artificial graphite, a negative electrode conductive agent Super P, a stabilizer sodium carboxymethyl cellulose (CMC-Na, Mw = 7 × $10^5$), and a negative electrode binder styrene-butadiene rubber (SBR, Mw = 50 × $10^5$) were mixed at a mass ratio of 96:1.0:1.5:1.5, and then deionized water was added as a solvent. The resulting mixture was stirred under the action of a vacuum mixer to obtain a negative electrode slurry with a solid content of 51wt% and a uniform system. The negative electrode slurry was uniformly applied on a negative electrode body region of one surface of a negative electrode current collector copper foil with a thickness of 10 μm, and dried at 85°C to obtain a negative electrode sheet having one surface coated with a negative electrode active material layer. Then, the above steps were repeated on a negative electrode body region of another surface of the copper foil to obtain a negative electrode sheet having two surfaces coated with negative electrode active material layers. Then, cold pressing, die-cutting, and slitting were performed. Drying was performed at 110°C for 4 h under vacuum after slitting to obtain a negative electrode sheet with a specification of 62 mm × 1600 mm for later use. A single-layer thickness of the negative electrode active material layer was 58.5 μm, and a thickness of the negative electrode sheet was 127 μm. A negative electrode tab region of the negative electrode current collector was integrally formed by die-cutting (with a structure as shown in FIG. 5, but not limited to FIG. 5) to form 20 negative electrode tabs. A coating weight $W_f$ of the negative electrode active material layer was 4.54 mg/cm$^2$.

<Preparation of electrolyte>

In a dry argon atmosphere glove box, a chain carboxylate compound n-propyl propionate and non-chain carboxylate compounds ethylene carbonate and diethyl carbonate were used as an organic solvent, and then a lithium salt lithium hexafluorophosphate ($LiPF_6$) and an additive succinonitrile were added to the organic solvent, dissolved, and mixed well to obtain an electrolyte. Based on a mass of the electrolyte, a mass percentage of n-propyl propionate was 40%, a mass percentage of the organic solvent was 80%, a mass percentage of $LiPF_6$ was 17%, and a mass percentage of succinonitrile was 3%. A mass percentage ratio of ethylene carbonate to diethyl carbonate was 1:1.

<Preparation of separator>

A polypropylene film with a thickness of 5 μm was used as a separator.

<Preparation of lithium-ion battery>

The separator, the positive electrode sheet, the separator, and the negative electrode sheet were stacked in sequence, so that the separator was located between the positive electrode sheet and the negative electrode sheet for isolation. Then, the resulting stack was wound to obtain an electrode assembly. A positive electrode tab was led out as an aluminum tab by spot-welding, and a negative electrode tab was led out as a nickel tab by spot-welding. After winding, each layer of positive electrode sheet provided with positive electrode tabs in the electrode assembly had one positive electrode tab, and each layer of negative electrode sheet provided with negative electrode tabs had one negative electrode tab. The number $N_1$ of layers of positive electrode sheets provided between two adjacent positive electrode tabs was 0, and the number $N_2$ of layers of negative electrode sheets provided between two adjacent negative electrode tabs was 0 (the

settings of positive and negative electrode tabs were as shown in FIG. 1, but not limited to FIG. 1).

The electrode assembly was placed in an aluminum-plastic film housing, and electrolyte injection was performed after drying. Then, processes such as vacuum packaging, standing, formation, capacity testing, degassing, and trimming were performed to obtain a lithium-ion battery.

### Examples 1-2 to 1-12

These examples were the same as Example 1-1 except that the relevant preparation parameters were adjusted according to Table 1. When the percentage of the chain carboxylate compound in the electrolyte changed, the percentage of the organic solvent remained unchanged, and the percentages of the non-chain carboxylate compounds ethylene carbonate and diethyl carbonate in the organic solvent changed accordingly, where a mass percentage ratio of ethylene carbonate to diethyl carbonate remained at 1:1.

### Example 1-13

<Preparation of positive electrode sheet>

Except that the positive electrode tab region of the positive electrode current collector integrally extended to form 10 positive electrode tabs, the rest was the same as that in Example 1-1.

<Preparation of negative electrode sheet>

Except that the negative electrode tab region of the negative electrode current collector integrally extended to form 10 negative electrode tabs, the rest was the same as that in Example 1-1.

<Preparation of lithium-ion battery>

Except that the number $N_1$ of layers of positive electrode sheets provided between two adjacent positive electrode tabs was 1, and the number $N_2$ of layers of negative electrode sheets provided between two adjacent negative electrode tabs was 1, the rest was the same as that in Example 1-1.

<Preparation of separator> and <preparation of electrolyte> were the same as those in Example 1-1.

### Example 1-14

<Preparation of positive electrode sheet>

Except that the positive electrode tab region of the positive electrode current collector integrally extended to form 6 positive electrode tabs, the rest was the same as that in Example 1-1.

<Preparation of negative electrode sheet>

Except that the negative electrode tab region of the negative electrode current collector integrally extended to form 6 negative electrode tabs, the rest was the same as that in Example 1-1.

<Preparation of lithium-ion battery>

Except that the number $N_1$ of layers of positive electrode sheets provided between two adjacent positive electrode tabs was 2, and the number $N_2$ of layers of negative electrode sheets provided between two adjacent negative electrode tabs was 2, the rest was the same as that in Example 1-1.

<Preparation of separator> and <preparation of electrolyte> were the same as those in Example 1-1.

### Examples 2-1 to 2-8

These examples were the same Example 1-1 except that the relevant preparation parameters were adjusted according to Table 2. When the types of the non-chain carboxylate compounds in the organic solvent changed, a ratio of percentages of the non-chain carboxylate compounds remained unchanged. When the percentage of the organic solvent

changed, the percentage of the chain carboxylate compound in the organic solvent remained unchanged, the percentages of the non-chain carboxylate compounds in the organic solvent changed accordingly, and a mass ratio of the two substances in the non-chain carboxylate compound remained at 1:1.

**Example 2-9**

This example was the same as Example 1-1 except that no additive was added in <preparation of electrolyte>, and the relevant preparation parameters were adjusted according to Table 2. When the percentage of the organic solvent changed, the percentage of the chain carboxylate compound in the organic solvent remained unchanged, and the percentages of the non-chain carboxylate compounds ethylene carbonate and diethyl carbonate in the organic solvent changed accordingly, where a mass percentage ratio of ethylene carbonate to diethyl carbonate remained at 1:1.

**Example 2-10**

This example was the same as Example 1-1 except that the relevant preparation parameters were adjusted according to Table 2.

**Comparative Examples 1 to 4**

These comparative examples were the same as Example 1-1 except that the relevant preparation parameters were adjusted according to Table 1.

**Comparative Example 5**

This comparative example was the same as Example 1-1 except that <preparation of electrolyte> adopted the following preparation steps.

<Preparation of electrolyte>

In a dry argon atmosphere glove box, non-chain carboxylate compounds ethylene carbonate and diethyl carbonate were used as an organic solvent, and then a lithium salt lithium hexafluorophosphate ($LiPF_6$) and an additive succinonitrile were added to the organic solvent, dissolved, and mixed well to obtain the electrolyte. Based on a mass of the electrolyte, a mass percentage of the organic solvent was 80%, a mass percentage of $LiPF_6$ was 17%, and a mass percentage of succinonitrile was 3%. A mass percentage ratio of ethylene carbonate to diethyl carbonate was 1:1.

**Comparative Examples 6 and 7**

These comparative examples were the same as Example 1-1 except that the relevant preparation parameters were adjusted according to Table 1. When the percentage of the chain carboxylate compound in the electrolyte changed, the percentage of the organic solvent remained unchanged, and the percentages of the non-chain carboxylate compounds ethylene carbonate and diethyl carbonate in the organic solvent changed accordingly, where a mass percentage ratio of ethylene carbonate to diethyl carbonate remained at 1:1.

**Comparative Example 8**

This comparative example was the same as Example 1-1 except that <preparation of positive electrode sheet>, <preparation of negative electrode sheet>, <preparation of lithium-ion battery> adopted the following preparation steps.

<Preparation of positive electrode sheet>

A positive electrode active material lithium cobalt oxide, a positive electrode conductive agent superconducting carbon (Super P), and a positive electrode binder polyvinylidene fluoride (PVDF, $Mw = 7 \times 10^5$) were mixed at a mass ratio of 96:2:2, and N-methylpyrrolidone (NMP) was added as a solvent. The resulting mixture was stirred under the action of a vacuum mixer to obtain a positive electrode slurry with a solid content of 75wt% and a uniform system. The positive electrode slurry was uniformly applied on one surface of a positive electrode current collector aluminum foil with a thickness of 13 $\mu$m, and dried at 95°C to obtain a positive electrode sheet having one surface coated with a positive electrode active material layer. Then, the above steps were repeated on another surface of the aluminum foil to obtain a positive electrode sheet having two surfaces coated with positive electrode active material layers. Then, cold pressing,

cutting, and slitting were performed. Drying was performed at 85°C for 4 h under vacuum after slitting. Then, one positive electrode tab that was an aluminum tab was welded to the surface of the positive electrode current collector to obtain a positive electrode sheet with a specification of 60 mm × 1580 mm for later use. A single-layer thickness of the positive electrode active material layer was 38.5 μm, and a thickness of the positive electrode sheet was 90 μm. A coating weight $W_z$ of the positive electrode active material layer was 9.08 mg/cm$^2$.

<Preparation of negative electrode sheet>

A negative electrode active material artificial graphite, a negative electrode conductive agent Super P, a stabilizer sodium carboxymethyl cellulose (CMC-Na, Mw = 7 × 10$^5$), and a negative electrode binder styrene-butadiene rubber (SBR, Mw = 50 × 10$^5$) were mixed at a mass ratio of 96.5:1.0:1.0:1.5, and then deionized water was added as a solvent. The resulting mixture was stirred under the action of a vacuum mixer to obtain the negative electrode slurry with a solid content of 51wt% and a uniform system. The negative electrode slurry was uniformly applied on one surface of a negative electrode current collector copper foil with a thickness of 10 μm, and dried at 85°C to obtain a negative electrode sheet having one surface coated with a negative electrode active material layer. Then, the above steps were repeated on another surface of the copper foil to obtain a negative electrode sheet having two surfaces coated with negative electrode active material layers. Then, cold pressing, cutting, and slitting were performed. Drying was performed at 110°C for 4 h under vacuum after slitting. Then, one negative electrode tab that was a nickel tab was welded to the surface of the negative electrode current collector to obtain a negative electrode sheet with a specification of 62 mm × 1600 mm for later use. A single-layer thickness of the negative electrode active material layer was 58.5 μm, and a thickness of the negative electrode sheet was 127 μm. A coating weight $W_f$ of the negative electrode active material layer was 4.54 mg/cm$^2$.

<Preparation of lithium-ion battery>

The separator, the positive electrode sheet, the separator, and the negative electrode sheet were stacked in sequence, so that the separator was located between the positive electrode sheet and the negative electrode sheet for isolation. Then, the resulting stack was wound to obtain an electrode assembly. The electrode assembly was placed in an aluminum-plastic film housing, and electrolyte injection was performed after drying. Then, processes such as vacuum packaging, standing, formation, capacity testing, degassing, and trimming were performed to obtain a lithium-ion battery.

**Comparative Example 9**

This comparative example was the same as Comparative Example 8 except that <Preparation of electrolyte> was the same as that in Comparative Example 5.

**Comparative Example 10**

This comparative example was the same as Comparative Example 5 except that the relevant preparation parameters were adjusted according to Table 1.

**Comparative Example 11**

This comparative example was the same as Comparative Example 9 except that the relevant preparation parameters were adjusted according to Table 1.

The preparation parameters and performance parameters of examples and comparative examples were shown in Tables 1 and 2.

**Table 1**

| | $W_f$ (mg/cm$^2$) | $W_z/W_f$ | $W_z$ (mg/cm$^2$) | Percentage of chain carboxylate compound in electrolyte (%) | Type of chain carboxylate compound | $N_1$ | $N_2$ | Charging speed at 10C (min) | Charging temperature rise at 10C (°C) | Capacity retention rate (%) | Lithium-ion battery impedance (mΩ) |
|---|---|---|---|---|---|---|---|---|---|---|---|
| Example 1-1 | 4.54 | 2.0 | 9.08 | 40 | N-propyl propionate | 0 | 0 | 15.1 | 18.6 | 85.2 | 8.2 |
| Example 1-2 | 3.25 | 2.0 | 6.50 | 40 | N-propyl propionate | 0 | 0 | 12.2 | 15.5 | 85.6 | 7.8 |
| Example 1-3 | 5.84 | 2.0 | 11.68 | 40 | N-propyl propionate | 0 | 0 | 16.4 | 19.8 | 84.2 | 8.6 |
| Example 1-4 | 4.54 | 1.6 | 7.26 | 40 | N-propyl propionate | 0 | 0 | 14.4 | 17.9 | 83.4 | 8.0 |
| Example 1-5 | 4.54 | 2.2 | 9.99 | 40 | N-propyl propionate | 0 | 0 | 16.0 | 19.2 | 75.2 | 8.4 |
| Example 1-6 | 3.25 | 1.6 | 5.20 | 40 | N-propyl propionate | 0 | 0 | 14.0 | 17.6 | 71.3 | 7.9 |
| Example 1-7 | 5.84 | 2.2 | 12.85 | 40 | N-propyl propionate | 0 | 0 | 17.5 | 22.9 | 63.2 | 8.8 |
| Example 1-8 | 4.54 | 2 | 9.08 | 6 | N-propyl propionate | 0 | 0 | 17.1 | 18.2 | 65.4 | 11.4 |
| Example 1-9 | 4.54 | 2 | 9.08 | 20 | N-propyl propionate | 0 | 0 | 15.5 | 7.9 | 70.2 | 9.7 |
| Example 1-10 | 4.54 | 2 | 9.08 | 56 | N-propyl propionate | 0 | 0 | 14.2 | 16.9 | 80.9 | 7.6 |
| Example 1-11 | 4.54 | 2 | 9.08 | 40 | Ethyl propionate | 0 | 0 | 15.4 | 18.9 | 84.3 | 8.2 |
| Example 1-12 | 4.54 | 2 | 9.08 | 40 | N-pentyl isobutyrate | 0 | 0 | 15.4 | 18.8 | 83.2 | 8.3 |
| Example 1-13 | 4.54 | 2 | 9.08 | 40 | N-propyl propionate | 1 | 1 | 16.7 | 19.6 | 82.1 | 10.4 |
| Example 1-14 | 4.54 | 2 | 9.08 | 40 | N-propyl propionate | 2 | 2 | 17.8 | 20.2 | 76.4 | 12.3 |

(continued)

| | $W_f$ (mg/cm$^2$) | $W_z/W_f$ | $W_z$ (mg/cm$^2$) | Percentage of chain carboxylate compound in electrolyte (%) | Type of chain carboxylate compound | $N_1$ | $N_2$ | Charging speed at 10C (min) | Charging temperature rise at 10C (°C) | Capacity retention rate (%) | Lithium-ion battery impedance (mΩ) |
|---|---|---|---|---|---|---|---|---|---|---|---|
| Comparative Example 1 | 2.5 | 2 | 5 | 40 | N-propyl propionate | 0 | 0 | 12.0 | 15.3 | 82.6 | 7.5 |
| Comparative Example 2 | 7.5 | 2 | 15 | 40 | N-propyl propionate | 0 | 0 | 22.0 | 27.4 | 44.3 | 16.6 |
| Comparative Example 3 | 4.54 | 1 | 4.54 | 40 | N-propyl propionate | 0 | 0 | 15.5 | 19.0 | 10.3 | 8.4 |
| Comparative Example 4 | 4.54 | 3 | 13.62 | 40 | N-propyl propionate | 0 | 0 | 15.6 | 19.1 | 20.3 | 8.4 |
| Comparative Example 5 | 4.54 | 2 | 9.08 | / | / | 0 | 0 | 24.7 | 30.6 | 23.5 | 50.4 |
| Comparative Example 6 | 4.54 | 2 | 9.08 | 2 | N-propyl propionate | 0 | 0 | 23.3 | 28.7 | 30.4 | 45.3 |
| Comparative Example 7 | 4.54 | 2 | 9.08 | 60 | N-propyl propionate | 0 | 0 | 14.1 | 16.7 | 50.4 | 7.1 |
| Comparative Example 8 | 4.54 | 2 | 9.08 | 40 | N-propyl propionate | / | / | 18.8 | 22.5 | 42.3 | 16.4 |
| Comparative Example 9 | 4.54 | 2 | 9.08 | / | / | / | / | 29.7 | 33.6 | 40.3 | 60.2 |
| Comparative Example 10 | 4.54 | 3 | 13.62 | / | / | 0 | 0 | 19.7 | 23.6 | 41.3 | 20.2 |
| Comparative Example 11 | 4.54 | 3 | 13.62 | / | / | / | / | 33.7 | 36.6 | 32.3 | 63.2 |

Note: "/" in Table 1 indicates no corresponding parameter.

From Examples 1-1 to 1-14 and Comparative Examples 1 to 11, it can be seen that the lithium-ion battery in each of the examples of this application, the positive electrode current collector is configured to integrally extend to form multiple positive electrode tabs and the negative electrode current collector is configured to integrally extend to form multiple negative electrode tabs, so that the lithium-ion battery has a multi-tab structure. In addition, the ratio $W_z/W_f$ of the coating weight $W_z$ of the positive electrode active material layer to the coating weight $W_f$ of the negative electrode active material layer and the value of $W_f$ are adjusted within the ranges of this application, and the chain carboxylate compound is added to the electrolyte, and the mass percentage of the chain carboxylate compound is adjusted within the range of this application, so that the lithium-ion battery has lower impedance, a shorter charging time (that is, a higher charging speed), a lower charging temperature rise, and a higher capacity retention rate at the charging rate of 10C, indicating that the lithium-ion battery in each of the examples of this application has better kinetic performance and cycling performance during fast charging.

In the lithium-ion battery in each of Comparative Examples 1 and 2, the coating weight $W_f$ of the negative electrode active material layer is not within the range of this application. In the lithium-ion battery in each of Comparative Examples 3 and 4, the ratio $W_z/W_f$ of the coating weight $W_z$ of the positive electrode active material layer to the coating weight $W_f$ of the negative electrode active material layer is not within the range of this application. The coating weight $W_z$ of the positive electrode active material layer and the coating weight $W_f$ of the negative electrode active material layer in Comparative Example 1 are low, so that the obtained lithium-ion battery had a faster charging speed and lower impedance. However, due to the excessively low coating weights of the positive electrode active material layer and the negative electrode active material layer, the cost of precisely controlling the coating weight in actual industrial production is excessively high, the yield of lithium-ion batteries obtained in large-scale production is excessively low, and the energy density of the obtained lithium-ion batteries is excessively low, which cannot meet the needs of actual production and are not suitable for industrial production applications. The lithium-ion battery in Comparative Example 2 has higher impedance, a longer charging time (that is, a lower charging speed), a higher charging temperature rise, and a lower capacity retention rate at the charging rate of 10C, indicating that the lithium-ion battery has poor kinetic performance and cycling performance during high-rate fast charging. The coating weight $W_z$ of the positive electrode active material layer in Comparative Example 3 is the lowest, and the coating weight of the negative electrode active material layer is excessively large relative to the coating weight of the positive electrode active material layer. When the potential of the secondary battery is reached, a lithium deintercalation speed of the positive electrode increases significantly, resulting in an extremely high actual potential of the positive electrode and causing the structure to be easily damaged, and leading to rapid decay of the positive electrode and extremely poor cycle life of the secondary battery. The coating weight $W_z$ of the positive electrode active material layer in Comparative Example 4 is excessively large, and the ratio $W_z/W_f$ to the coating weight $W_f$ of the negative electrode active material layer is excessively large, resulting in capacity mismatch between the positive electrode sheet and the negative electrode sheet. During fast charging of the lithium-ion battery, the lithium ions in the positive electrode sheet cannot be deintercalated in time, and the lithium ions cannot be intercalated into the negative electrode sheet in time, which cannot meet the charging speed requirements during fast charging, easily leading to lithium precipitation, a low capacity retention rate, and poor cycling performance of the lithium-ion battery. No chain carboxylate compound is added to the electrolyte in Comparative Example 5. The mass percentages of the chain carboxylate compounds in Comparative Examples 6 and 7 are not within the range of this application. The lithium-ion battery in each of Comparative Examples 5 and 6 has higher impedance, a longer charging time (that is, a lower charging speed), a higher charging temperature rise, and a lower capacity retention rate at the charging rate of 10C, indicating that the lithium-ion battery has poor kinetic performance and cycling performance during fast charging. In Comparative Example 7, due to the excessively high mass percentage of the chain carboxylate compound, the battery system activity is too strong, and side reactions easily occur during the cycling process, leading to a decrease in capacity retention rate, and poor cycling performance of the lithium-ion battery. The lithium-ion battery in Comparative Example 8 has an embedded single-tab structure rather than the multi-tab structure of this application, so that the obtained lithium-ion battery has higher impedance, a longer charging time (that is, a lower charging speed), a higher charging temperature rise, and a lower capacity retention rate at the charging rate of 10C, indicating that the lithium-ion battery has poor kinetic performance and cycling performance during fast charging. No chain carboxylate compound is added to the electrolyte in Comparative Example 9, and the lithium-ion battery has an embedded single-tab structure rather than the multi-tab structure of this application, so that the obtained lithium-ion battery has higher impedance, a longer charging time (that is, a lower charging speed), a higher charging temperature rise, and a lower capacity retention rate at the charging rate of 10C, indicating that the lithium-ion battery had poor kinetic performance and cycling performance during fast charging. In the lithium-ion battery of Comparative Example 10, the ratio $W_z/W_f$ of the coating weight $W_z$ of the positive electrode active material layer to the coating weight $W_f$ of the negative electrode active material layer is not within the range of this application, and no chain carboxylate compound is added to the electrolyte, so that the obtained lithium-ion battery has higher impedance, a longer charging time (that is, a lower charging speed), a higher charging temperature rise, and a lower capacity retention rate at the charging rate of 10C, indicating that the lithium-ion battery has poor kinetic performance and cycling performance during fast charging. In the lithium-ion battery of Comparative Example 11, the ratio $W_z/W_f$ of the coating

weight $W_z$ of the positive electrode active material layer to the coating weight $W_f$ of the negative electrode active material layer is not within the range of this application, no chain carboxylate compound is added to the electrolyte, and the lithium-ion battery has an embedded single-tab structure rather than the multi-tab structure of this application, so that the obtained lithium-ion battery has higher impedance, a longer charging time (that is, a lower charging speed), a higher charging temperature rise, and a lower capacity retention rate at the charging rate of 10C, indicating that the lithium-ion battery has poor kinetic performance and cycling performance during fast charging.

The coating weight $W_z$ of the positive electrode active material layer typically affects the kinetic performance and cycling performance of the lithium-ion battery during high-rate fast charging. From Examples 1-4 to 1-7, it can be seen that the lithium-ion battery using $W_z$ within the range of this application has low impedance, a short charging time (that is, a high charging speed), a low charging temperature rise, and a high capacity retention rate at the charging rate of 10C, indicating that the lithium-ion battery has good kinetic performance and cycling performance during fast charging. The coating weight $W_z$ of the positive electrode active material layer in Example 1-6 is low, and there is a small difference between the coating weight of the negative electrode active material layer and the coating weight of the positive electrode active material layer. When the potential of the secondary battery is reached, the lithium deintercalation speed of the positive electrode increases, which may lead to excessive lithium deintercalation of the positive electrode, thus reducing the capacity retention rate of the lithium-ion battery. Furthermore, although the lithium-ion battery has a fast charging speed and low impedance, the energy density of the lithium-ion battery is low, making it difficult to control the coating weight of the positive electrode active material layer during actual industrial production. In Example 1-7, the coating weight $W_z$ of the positive electrode active material layer is high, and there is a large difference between the coating weight of the negative electrode active material layer and the coating weight of the positive electrode active material layer. During fast charging of the lithium-ion battery, the lithium ions in the positive electrode sheet cannot be deintercalated in time, and the lithium ions cannot be intercalated into the negative electrode sheet in time, easily leading to lithium precipitation, thus reducing the capacity retention rate of the lithium-ion battery. The type of the chain carboxylate compound typically affects the kinetic performance and cycling performance of the lithium-ion battery during high-rate fast charging. From Examples 1-1, 1-11, and 1-12, it can be seen that the lithium-ion battery using the type of chain carboxylate compound within the range of this application has low impedance, a short charging time (that is, a high charging speed), a low charging temperature rise, and a high capacity retention rate at the charging rate of 10C, indicating that the lithium-ion battery has good kinetic performance during fast charging.

The values of $N_1$ and $N_2$ typically affect the kinetic performance and cycling performance of the lithium-ion battery during fast charging. From Examples 1-1, 1-13, and 1-14, it can be seen that the lithium-ion battery using the values of $N_1$ and $N_2$ within the ranges of this application has low impedance, a short charging time (that is, a high charging speed), a low charging temperature rise, and a high capacity retention rate at the charging rate of 10C, indicating that the lithium-ion battery has good kinetic performance and cycling performance during fast charging.

**Table 2**

| | Non-chain carboxylate | Percentage of organic solvent (%) | Type of lithium salt | Percentage of lithium salt (%) | Type of additive | Percentage of additive (%) | Charging speed at 10C (min) | Charging temperature rise at 10C (°C) | Capacity retention rate (%) | Lithium-ion battery impedance (mΩ) |
|---|---|---|---|---|---|---|---|---|---|---|
| Example 1-1 | Ethylene carbonate + diethyl carbonate | 80 | $LiPF_6$ | 17 | Succinonitrile | 3 | 15.1 | 18.1 | 85.2 | 8.2 |
| Example 2-1 | Ethylene carbonate + methyl ethyl carbonate | 80 | $LiPF_6$ | 17 | Succinonitrile | 3 | 14.4 | 17.7 | 86.3 | 8.1 |
| Example 2-2 | γ-butyrolactone + diethyl carbonate | 80 | $LiPF_6$ | 17 | Succinonitrile | 3 | 15.7 | 18.9 | 85.8 | 8.3 |
| Example 2-3 | Ethylene carbonate + diethyl carbonate | 70 | $LiPF_6$ | 20 | Succinonitrile | 10 | 15.6 | 18.9 | 86.6 | 8.8 |
| Example 2-4 | Ethylene carbonate + diethyl carbonate | 80 | $LiPF_6$ | 18 | Succinonitrile | 2 | 15.1 | 18.6 | 87.3 | 7.6 |
| Example 2-5 | / | 56 | $LiPF_6$ | 36 | Succinonitrile | 8 | 15.8 | 19.0 | 83.3 | 9.0 |
| Example 2-6 | Ethylene carbonate + diethyl carbonate | 80 | $LiBF_4$ | 17 | Succinonitrile | 3 | 15.3 | 18.8 | 85.9 | 8.3 |
| Example 2-7 | Ethylene carbonate + diethyl carbonate | 80 | $LiPF_6$ | 10 | Succinonitrile | 10 | 15.5 | 19.0 | 87.4 | 8.3 |
| Example 2-8 | Ethylene carbonate + diethyl carbonate | 78 | $LiPF_6$ | 20 | Succinonitrile | 2 | 15.4 | 18.8 | 86.9 | 8.3 |
| Example 2-9 | Ethylene carbonate + diethyl carbonate | 80 | $LiPF_6$ | 20 | / | / | 15.7 | 19.2 | 83.2 | 8.8 |

(continued)

| | Non-chain carboxylate | Percentage of organic solvent (%) | Type of lithium salt | Percentage of lithium salt (%) | Type of additive | Percentage of additive (%) | Charging speed at 10C (min) | Charging temperature rise at 10C (°C) | Capacity retention rate (%) | Lithium-ion battery impedance (mΩ) |
|---|---|---|---|---|---|---|---|---|---|---|
| Example 2-10 | Ethylene carbonate + diethyl carbonate | 80 | $LiPF_6$ | 17 | 1,2-bis(2-cyanoethoxy) ethane | 3 | 15.4 | 18.9 | 85.4 | 8.3 |
| Note: "/" in Table 2 indicates no corresponding parameter. | | | | | | | | | | |

The type and percentage of the organic solvent typically affect the kinetic performance and cycling performance of the lithium-ion battery during fast charging. From Examples 1-1, and 2-1 to 2-5, it can be seen that the lithium-ion battery using the type and percentage of the organic solvent within the ranges of this application has low impedance, a short charging time (that is, a high charging speed), a low charging temperature rise, and a high capacity retention rate at the charging rate of 10C, indicating that the lithium-ion battery has good kinetic performance and cycling performance during fast charging.

The type and percentage of the lithium salt typically affect the kinetic performance and cycling performance of the lithium-ion battery during fast charging. From Examples 1-1, and 2-6 to 2-8, it can be seen that the lithium-ion battery using the type and percentage of the lithium salt within the ranges of this application has low impedance, a short charging time (that is, a high charging speed), a low charging temperature rise, and a high capacity retention rate at the charging rate of 10C, indicating that the lithium-ion battery has good kinetic performance and cycling performance during fast charging.

The type and percentage of the additive typically affect the kinetic performance and cycling performance of the lithium-ion battery during fast charging. From Examples 1-1, and 2-7 to 2-10, it can be seen that the lithium-ion battery using the type and percentage of the additive within the ranges of this application has low impedance, a short charging time (that is, a high charging speed), a low charging temperature rise, and a high capacity retention rate at the charging rate of 10C, indicating that the lithium-ion battery has good kinetic performance and cycling performance during fast charging.

The terms "include", "comprise", or any other variant thereof are intended to cover non-exclusive inclusion, such that a process, method, or article that includes a series of elements includes not only those elements but also other elements not explicitly listed, or further includes elements inherent to such process, method, or article.

The various embodiments in this specification are described in a related manner, and identical or similar parts between the various embodiments can be referred to each other, with each embodiment focusing on differences from other embodiments.

The above descriptions are merely preferred embodiments of this application and are not intended to limit this application. Any modification, equivalent substitution, improvement, and the like made within the spirit and principle of this application shall fall within the protection scope of this application.

## Claims

1. A secondary battery, comprising a positive electrode sheet, a negative electrode sheet, and an electrolyte, wherein the positive electrode sheet comprises a positive electrode current collector and a positive electrode active material layer; the negative electrode sheet comprises a negative electrode current collector and a negative electrode active material layer; and a coating weight of the positive electrode active material layer is $W_z$, a coating weight of the negative electrode active material layer is $W_f$, and $W_z$ and $W_f$ satisfy: $1.6W_f \leq W_z \leq 2.2W_f$, and $3.25\ mg/cm^2 \leq W_f \leq 5.84\ mg/cm^2$;

   the positive electrode current collector integrally extends to form multiple positive electrode tabs, and the negative electrode current collector integrally extends to form multiple negative electrode tabs; and
   the electrolyte comprises an organic solvent, a lithium salt, and an additive, wherein the organic solvent comprises a chain carboxylate compound, and based on a mass of the electrolyte, a mass percentage of the chain carboxylate compound is 6% to 56%.

2. The secondary battery according to claim 1, wherein $6.49\ mg/cm^2 \leq W_z \leq 11.69\ mg/cm^2$.

3. The secondary battery according to claim 1, wherein $N_1$ layers of positive electrode sheets are provided between two adjacent positive electrode tabs, and $N_2$ layers of negative electrode sheets are provided between two adjacent negative electrode tabs; wherein the $N_1$ and $N_2$ are each independently selected from 0, 1, 2, or 3.

4. The secondary battery according to claim 1, wherein the chain carboxylate compound comprises at least one of methyl formate, methyl acetate, ethyl formate, ethyl acetate, propyl acetate, ethyl propionate, methyl propionate, n-propyl propionate, isopropyl propionate, n-butyl propionate, isobutyl propionate, n-pentyl propionate, isopentyl propionate, ethyl n-butyrate, n-propyl n-butyrate, propyl isobutyrate, n-pentyl n-butyrate, n-pentyl isobutyrate, n-butyl n-butyrate, isobutyl isobutyrate, or n-pentyl n-valerate.

5. The secondary battery according to claim 1, wherein the organic solvent further comprises at least one of ethylene carbonate, propylene carbonate, dimethyl carbonate, diethyl carbonate, methyl ethyl carbonate, $\gamma$-butyrolactone, or tetrahydrofuran; and based on the mass of the electrolyte, a mass percentage of the organic solvent is 60% to 80%.

**6.** The secondary battery according to claim 1, wherein based on the mass of the electrolyte, a mass percentage of the lithium salt is 10% to 20%.

**7.** The secondary battery according to claim 1, wherein the additive comprises at least one of succinonitrile, glutaronitrile, pimelonitrile, 1,2-bis(2-cyanoethoxy)ethane, 1,2-bis(2-cyanoethoxy)propane, or 1,2,3-tris(2-cyanoethoxy)propane; and based on the mass of the electrolyte, a mass percentage of the additive is 2% to 10%.

**8.** The secondary battery according to claim 1, wherein at least one of the following features is satisfied:

(1) the chain carboxylate compound comprises at least one of methyl formate, ethyl acetate, propyl acetate, methyl propionate, ethyl propionate, propyl propionate, or ethyl butyrate; or
(2) the lithium salt comprises at least one of lithium hexafluorophosphate, lithium difluorophosphate, lithium tetrafluoroborate, lithium hexafluoroarsenate, lithium perchlorate, lithium bis(fluorosulfonyl)imide, lithium bis(trifluoromethanesulfonyl)imide, lithium bis(oxalato)borate, or lithium difluoro(oxalato)borate.

**9.** An electric apparatus, comprising the secondary battery according to any one of claims 1 to 8

001
W
Up
Down
10
20
30
12
22

FIG. 1

001
W
Up
Down
10
20
30
12
22

FIG. 2

22
21
22
20
30
12
11
10
12
Z

FIG. 3

11
112
Y
111
12
X

FIG. 4

21
212
211
Y
X
22

FIG. 5

# INTERNATIONAL SEARCH REPORT

International application No.
**PCT/CN2023/130762**

**A. CLASSIFICATION OF SUBJECT MATTER**

H01M10/0525(2010.01)i；H01M10/052(2010.01)i；H01M 4/13(2010.01)i

According to International Patent Classification (IPC) or to both national classification and IPC

**B. FIELDS SEARCHED**

Minimum documentation searched (classification system followed by classification symbols)

IPC: H01M 10，H01M 4

Documentation searched other than minimum documentation to the extent that such documents are included in the fields searched

Electronic data base consulted during the international search (name of data base and, where practicable, search terms used)

ENTXTC, CNTXT, CNKI, VEN: 电池, 极片, 正极, 负极, 涂布, 涂覆, 质量, 重量, 面密度, 极耳, 链状, 乙酸甲酯, 乙酸乙酯, 乙酸丙酯, 丙酸乙酯, 丙酸甲酯, 丙酸正丙酯, 丙酸异丙酯, 丙酸正丁酯, 丙酸异丁酯, battery, anode, cathode, coat, surface, density, wt, tab, ethyl d acetate, propyl d propionate, butyl d propionate

**C. DOCUMENTS CONSIDERED TO BE RELEVANT**

| Category* | Citation of document, with indication, where appropriate, of the relevant passages | Relevant to claim No. |
|---|---|---|
| X | CN 109638212 A (DONGGUAN LIWINON ENERGY TECH CO., LTD.) 16 April 2019 (2019-04-16)<br>description, paragraph 0015, and embodiments 1-9 | 1-9 |
| A | CN 108428867 A (SHENZHEN Y.J TECHNOLOGY CO., LTD.) 21 August 2018 (2018-08-21)<br>claims 1-9, and description, embodiments 1-2 | 1-9 |
| A | CN 111193071 A (CHONGQING VDL ELECTRONICS CO., LTD.) 22 May 2020 (2020-05-22)<br>claims 1-10 | 1-9 |
| A | CN 112751030 A (SUZHOU WEIMU INTELLIGENT SYSTEM CO., LTD.) 04 May 2021 (2021-05-04)<br>description, embodiments 1-5 | 1-9 |
| A | CN 115275103 A (BYD CO., LTD.) 01 November 2022 (2022-11-01)<br>claims 1-19 | 1-9 |

☐ Further documents are listed in the continuation of Box C.　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 July 2024** | **15 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/130762**

| Patent document cited in search report | Publication date (day/month/year) | Patent family member(s) | Publication date (day/month/year) |
|---|---|---|---|
| CN 109638212 A | 16 April 2019 | None | |
| CN 108428867 A | 21 August 2018 | CN 108428867 B | 16 August 2019 |
| CN 111193071 A | 22 May 2020 | None | |
| CN 112751030 A | 04 May 2021 | None | |
| CN 115275103 A | 01 November 2022 | CN 115275103 B | 06 January 2023 |
| | | WO 2024067290 A1 | 04 April 2024 |

Form PCT/ISA/210 (patent family annex) (July 2022)